(19) Europäisches Patentamt
European Patent Office
Office européen des brevets

(11) **EP 2 983 046 A1**

(12) **EUROPÄISCHE PATENTANMELDUNG**

(43) Veröffentlichungstag:
**10.02.2016 Patentblatt 2016/06**

(51) Int Cl.:
***G03H 1/12*** *(2006.01)*      ***G03H 1/04*** *(2006.01)*

(21) Anmeldenummer: **15163225.4**

(22) Anmeldetag: **10.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Alfred-Nobel-Straße 10**
**40789 Monheim am Rhein (DE)**

(54) **VERFAHREN UND VORRICHTUNG ZUR HERSTELLUNG EINES HOLOGRAMMS**

(57) Die Erfindung betrifft ein Verfahren zum Herstellen eines Hologramms, insbesondere eines Transmissionshologramms, umfassend: Bereitstellen von einem Aufzeichnungshologramm (703, 803, 1203), Belichten des Aufzeichnungshologramms (703, 803, 1203) mit einem durch
eine kohärente Lichtquelle (809) erzeugten Objektstrahl (704, 804, 1204), wobei ein abzubildendes Objekt (711, 811,1231) in dem Objektstrahlengang vorgesehen ist, und Belichten des Aufzeichnungshologramms (703, 803, 1203) mit einem durch die kohärente Lichtquelle (809) erzeugten Referenzstrahl (705, 805, 1205), wobei der Referenzstrahl (705, 805, 1205) von einem optischen Referenzmodul (716, 816, 1230) derart winkelgeändert wird, dass der Referenzstrahl (705, 805, 1205) am Ort des Aufzeichnungshologramms (703, 803, 1203) ein Winkelspektrum aufweist.

Fig.7

**Beschreibung**

Die Erfindung betrifft ein Verfahren zur Herstellung eines Hologramms, insbesondere eines Transmissionshologramms, eine Vorrichtung zur Herstellung des Hologramms, ein Hologramm und eine Verwendung des Hologramms als holografisch-optisches Element für Weißlicht mit scharf begrenztem Sichtfeld.

Diffraktive Optiken werden heute in verschiedenen industriellen Anwendungen eingesetzt. Die Basis bilden hierbei diffraktive optische Elemente. Ein besonders breites Anwendungsspektrum wird der Gruppe der holografisch-optischen Elemente bzw. Hologrammen zugeschrieben. Insbesondere haben Volumenhologramme (VHOEs) in der heutigen Zeit eine hohe Relevanz erhalten. VHOEs sind per Definition dicke Hologramme. Deren Strukturen beugen Licht selektiver als dünne Hologramme, zu denen auch die Oberflächenhologramme zählen. Mit Volumenhologrammen können daher komplexe räumliche Lichtverteilungen erzeugt werden.

Man unterscheidet grundsätzlich zwei Arten von VHOEs, Transmissionshologramme und Reflexionshologramme. Ein Transmissionshologramm zeichnet sich durch ein Phasengitter aus, das einfallendes Licht bzw. einen einfallenden Lichtstrahl mit geeigneter Richtung und Spektralfarbe in Transmission beugt. Ein Transmissionshologramm eignet sich folglich als holografischer Diffusor, Linse, o.ä.

Ein Reflexionshologramm zeichnet sich dadurch aus, dass dessen Phasengitter als Spiegel wirkt. Es kann als reflektierendes und lichtlenkendes Element eingesetzt werden.

Als Lichtquellen zur Rekonstruktion der VHOEs können insbesondere monochromatische Lichtquellen, wie Laser, aber auch breitbandige Lichtquellen, wie weiße Leuchtdioden (LEDs), eingesetzt werden.

VHOEs können aus verschiedenen Materialien gebildet sein. Geeignet sind feinkörnige Silberhalogenid-Emulsionen oder Dichromatgelatinen, die ein nasschemisches Entwicklungsverfahren nach der Belichtung benötigen. In der US 5,854,697 wird eine photographische Emulsion für eine VHOE-Anwendung verwendet. Die Autoren berichten von einer Effizienz von nur 10%.

Ferner können Photopolymere eingesetzt werden. Photopolymere wurden 1969 als Mischung acrylischer Monomere (Barium- und Bleiacrylat sowie Acrylamid) und eines Photoinitiators beschrieben [D. H. Close, A. D. Jacobson, J. D. Margerum, R. G. Brault, F. J. McClung, Appl. Phys. Lett. 1969, 14, 159]. Typischerweise bestehen Photopolymere jedoch aus mindestens drei Komponenten: Photoinitiator, einem oder mehreren Monomeren und einem polymeren Binder. Typische Photopolymere für die Aufzeichnung mehrfarbiger Volumenhologramme beschreibt das Dokument US 4,963,471.

Auch sind bereits Verfahren zur Herstellung von Hologrammen aus dem Stand der Technik bekannt (z.B: H. M. Smith in "Principles of Holography", Wiley-Interscience 1969). Als ein Verfahren dient die Zweistrahlinterferenz, die Intensitätsmodulationen am Ort des holografischen Aufzeichnungsmediums, also dem Aufzeichnungshologramm erzeugt, welches über eine Photoreaktion eine Phasenmodulation gemäß der angelegten Intensitätsmodulation ausbildet. In diesen Gittern oder Modulationen ist die holografische Information gespeichert (S. Benton, "Holographic Imaging", John Wiley & Sons, 2008).

Verfahren zur Herstellung von mehrfarbigen, z.B. dreifarbigen VHOEs, sind ebenfalls aus der Literatur bekannt. Sie wurden erstmals von Friesem und Federowicz publiziert [A. A. Friesem, R. J. Federowicz, "Recent advances in multicolor wavefront reconstruction", Applied Optics, 5 (1966), Seiten 1085-1086)], [A. A. Friesem, R. J. Federowicz, "Multicolor wavefront reconstruction", Applied Optics, 6 (1967), Seiten 529-536)].

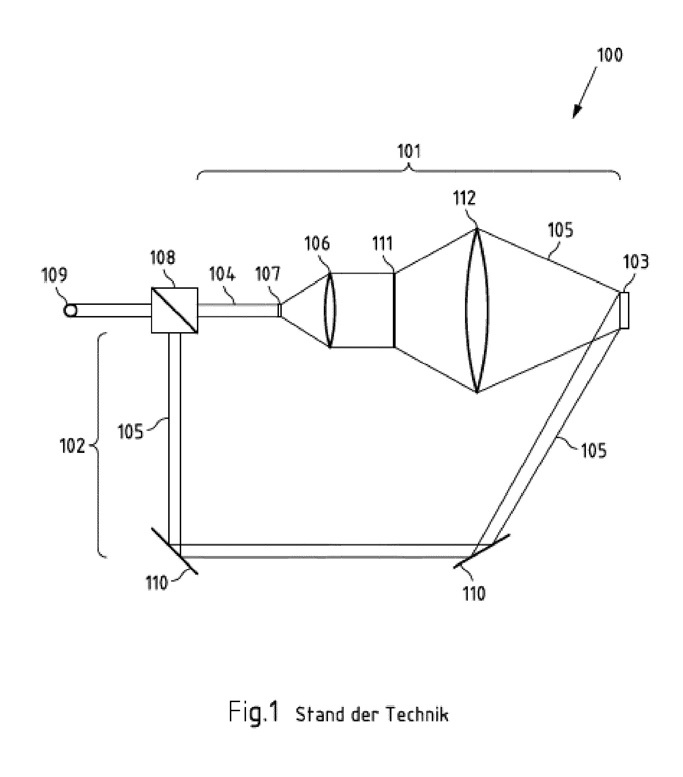

Figur 1 zeigt eine beispielhafte Stand der Technik Vorrichtung 100 zur Herstellung eines Hologramms. Das herzustellende Hologramm 103 bzw. holografische Aufzeichnungsmedium 103 wird mit einem Objektstrahl 104 und einem Referenzstrahl 105 belichtet. Über ein halbtransparentes optisches Modul 108 werden aus dem von einer kohärenten Lichtquelle 109 bereitgestellten Lichtstrahl der Objektstrahl 104 und der Referenzstrahl 105 gebildet. In dem Referenzstrahlengang 102 wird der Referenzstrahl 105 über Spiegel 110 auf das Aufzeichnungshologramm 103 gelenkt.

Im Objektstrahlengang 101 wird der Objektstrahl 104 zunächst durch die Module 106 und 107 aufgeweitet. Ferner ist eine Streuscheibe 111 vorgesehen, welche mit einer hochaperturigen Linse 112, wie eine Fresnellinse 112, das Muster der Streuscheibe 111 auf die Hologrammebene abbildet. Beispielsweise kann die Streuscheibe 111 eine Maskierung aufweisen. Die Maskierung kann so gebildet sein, dass ein gewünschtes Muster auf dem Hologramm entsteht. Durch den beschriebenen Aufbau 100 wird ein Hologramm erzeugt, welches nur im nicht-maskierten Bereich streut, sobald es mit der passenden Referenzwelle rekonstruiert wird.

Im Folgenden werden insbesondere Transmissions-Volumenhologramme und Methoden zu deren Herstellung behandelt, die verkürzt als Hologramme bzw. Verfahren zur Herstellung eines Hologramms bezeichnet werden.

Für die Lichtlenkung ist es oftmals von Interesse, homogene Lichtverteilungen zu erzeugen. Optische Elemente, die dies bewerkstelligen können, sind optische Streuer. Prinzipiell besteht die Möglichkeit, mit holografischen Verfahren Streuer mit bestimmten Streucharakteristika herzustellen. Ein Beispiel hierfür liefert die US 4,799,739, in dem ein Hologramm beschrieben ist, das als holografischer Diffusor fungiert, indem es aus einer Punktlichtquelle ein Lichtfeld erzeugt, das sich über einen definierten, scharf begrenzten horizontalen Winkelbereich erstreckt.

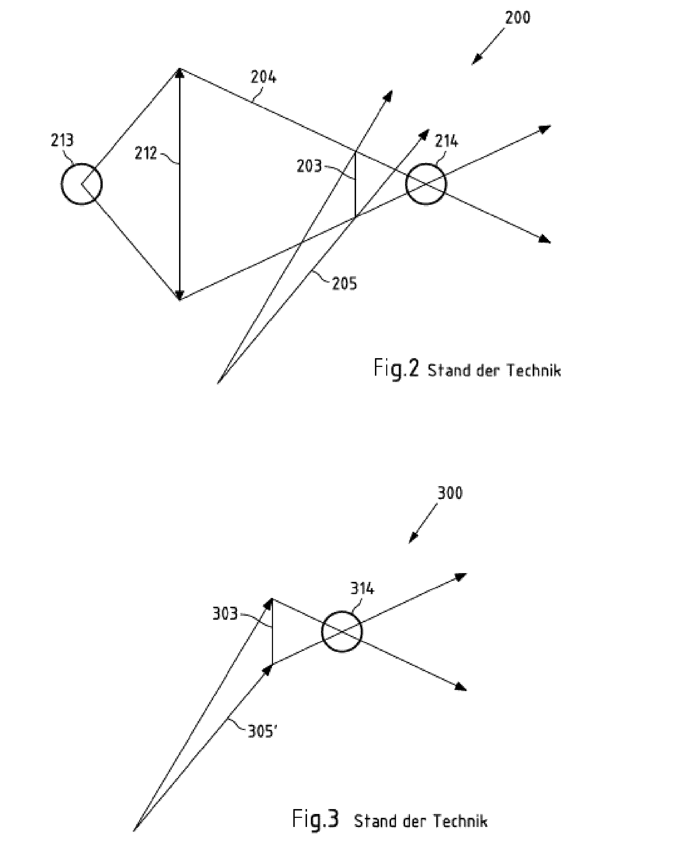

In der Figur 2 ist ein weiteres schematisches Beispiel gezeigt, wie ein holografischer Streuer nach dem Stand der Technik hergestellt werden kann. Bei der vereinfacht dargestellten Vorrichtung 200 wird ein klassischer Streuer mit einer Linse 212 abgebildet und bildet so den Objektstrahl 204. Raumpunkt 213 entspricht einem Ortspunkt des Streuers. Hinter der Linse befindet sich das aufzuzeichnende Hologramm 203, welchem die Referenzwelle 205 aus einer Punktlichtquelle (nicht dargestellt) zugemischt wird, welche mit der Objektwelle interferiert. Das Bezugszeichen 214 bezeichnet die Ortsposition, auf der Raumpunkt 213 abgebildet wird. Die Abbildung durch die Linse hat den Vorteil, dass die Rekonstruktion aus der Punktlichtquelle zu einem reellen Bild des Streuers führt, d.h. es kann eine definierte Helligkeitsverteilung zu Beleuchtungszwecken erzeugt werden.

Eine typische Beleuchtungsgeometrie zur Rekonstruktion des gemäß Figur 2 hergestellten Hologramms 303 zeigt das System 300 der Figur 3. Aus einer kugelförmig sich ausbreitenden Welle 305', der sogenannten Rekonstruktionswelle, erzeugt das Hologramm 303 eine homogene Lichtverteilung. Es ergibt sich ein definierter Fokuspunkt 314 für das reelle holografische Bild. Grundsätzlich ist für eine Rekonstruktion eines reellen Bildes erforderlich, dass die Phase der Rekonstruktionswelle konjugiert zu der Phase der Referenzwelle im Schreibvorgang ist. Anschaulich hat die Welle die gleiche Form, kommt allerdings aus der entgegengesetzten Richtung.

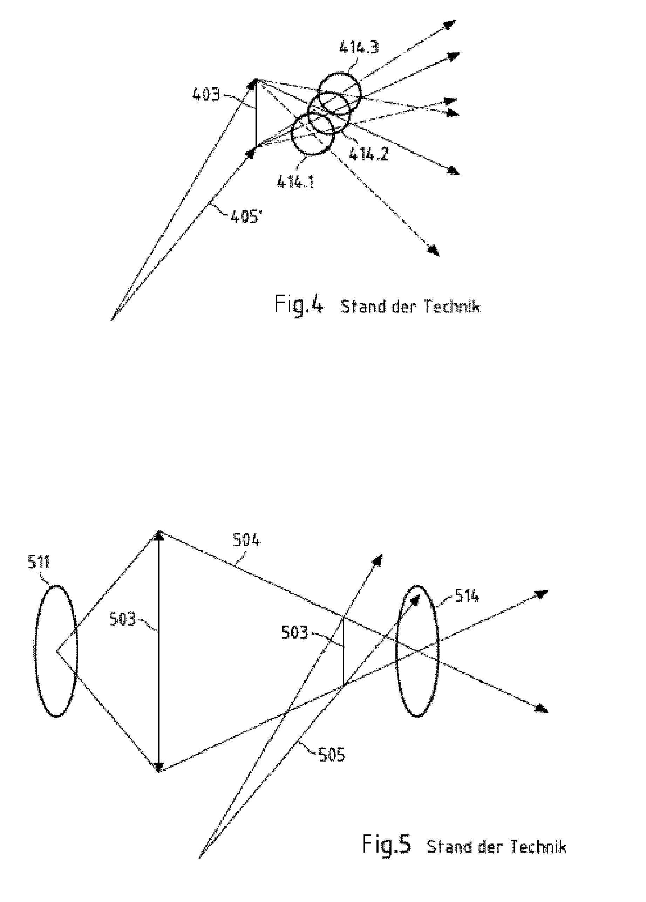

Über die erzielte Homogenisierung einer Lichtquelle hinaus ist es von Interesse, spektral breites, wie z.B. weißes Licht, wiederum in weißes Licht abzubilden. Ein Hologramm, das gemäß dem System 200 von Figur 2 hergestellt wurde, ist aber monochromatisch, d.h. die gewünschte Lichtverteilung stellt sich nur bei der Wellenlänge ein, mit der das Hologramm belichtet wurde. Wird das Hologramm jedoch mit polychromatischem, wie z.B. weißem Licht, (Lichtstrahl 405') rekonstruiert, siehe Figur 4, ergibt sich für jede Wellenlänge ein anderer Beugungswinkel und ein anderer Fokuspunkt, hier beispielhaft angezeigt durch drei Fokuspunkte 414.1, 414.2 und 414.3 für drei verschiedene Wellenlängen, respektive Spektralfarben. Hierbei bezeichnet das Bezugszeichen 414.1 vorliegend den Fokuspunkt von Rot, 414.2 den von Grün und 414.3 den von Blau. Dies führt zu Farbsäumen und je nach Gegebenheit dazu, dass an keiner Stelle mehr weißes Licht beobachtet werden kann, wie in Figur 4 durch die unterschiedlichen Rekonstruktionspunkte 414.1 bis 414.3 für die Spektralfarben exemplarisch gezeigt ist.

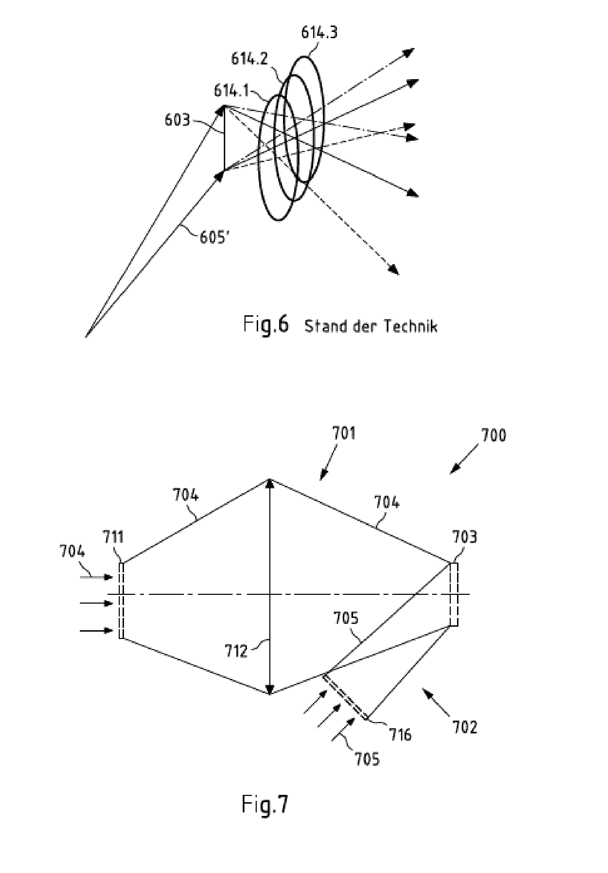

Ein Stand der Technik Ansatz, der bereits zuvor beschrieben wurde, um mindestens einen Bereich mit echt weißer Beleuchtung zu erzeugen, ist die Belichtung von Streuscheiben 511 in dem Objektstrahlengang, die in der Hauptbeugungsrichtung deutlich ausgedehnt sind, siehe Figuren 5 und 6. Die Vertikale in den Figuren entspricht hierbei der Hauptbeugungsrichtung. Bei der Rekonstruktion solcher Hologramme ergibt sich dann ein Überlappungsbereich, in dem sich alle Spektralfarben zu einem Weiß überlagern, zu erkennen in Figur 6 an dem Überlappungsbereich der drei Kreise 614.1 bis 614.3, die drei Hologramme in den Spektralfarben Rot (614.1), Grün (614.2), und Blau (614.3) repräsentieren.

Das Problem bei dieser Art der Belichtung bzw. Herstellung von Hologrammen ist jedoch, dass das resultierende Hologramm nicht für alle Winkel und Farben gleichermaßen effizient ist. Physikalisch erklärt sich dieser Sachverhalt wie folgt: Um für eine bestimmte Farbe aus einem bestimmten Winkel effizient zu beugen, ist es erforderlich, dass ein Gitter (und Hologramme sind letztendlich eine verallgemeinerte Form von Gittern bzw. weisen ein bestimmtes Gitter auf) sowohl die richtige Gitterperiode als auch den richtigen Gitterwinkel besitzt, d.h. es sind zwei Parameter unabhängig voneinander richtig einzustellen. Durch das Belichten einer in Hauptbeugungsrichtung besonders ausgedehnten Streuscheibe werden aber nicht beide Bedingungen gleichzeitig erfüllt.

Der von Friesem und Federowicz (obige Referenz) beschriebene Interferenzaufbau mit drei verschiedenfarbigen Laserstrahlen hat den Nachteil, dass mehrere monochromatische kohärente Lichtquellen benötigt werden. Dies verteuert und verkompliziert die Belichtungsvorrichtungen. Bevorzugt wäre ein Aufbau, der ein farbiges Hologramm unter Verwendung nur einer monochromatischen Lichtquelle, liefert.

Die technische Aufgabe lautet daher, ein Verfahren zur Herstellung eines Hologramms und eine Vorrichtung zur Herstellung eines Hologramms bereitzustellen, welche die Herstellung eines Hologramms ermöglicht, das bei einer Rekonstruktion mit einer weißen Punktlichtquelle oder alternativ mit einem kollimierten Strahl weißen Lichts ein homogenes Lichtfeld an einer gewünschten Raumposition mit einem klar definierten Weißpunkt bereitstellt.

Die technische Aufgabe wird erfindungsgemäß durch das Verfahren gemäß Anspruch 1 gelöst. Das Verfahren zum Herstellen eines Hologramms, insbesondere eines Transmissionshologramms, umfasst:

- Bereitstellen von einem Aufzeichnungshologramm,
- Belichten des Aufzeichnungshologramms mit einem durch eine kohärente Lichtquelle erzeugten Objektstrahl, wobei ein abzubildendes Objekt in dem Objektstrahlengang vorgesehen ist, und
- Belichten des Aufzeichnungshologramms mit einem durch die kohärente Lichtquelle erzeugten Referenzstrahl, wobei
- der Referenzstrahl von einem optischen Referenzmodul derart winkelgeändert wird, dass der Referenzstrahl am Ort des Aufzeichnungshologramms ein Winkelspektrum aufweist.

Indem im Gegensatz zum Stand der Technik der Referenzstrahl von einem optischen Referenzmodul winkelmoduliert wird, trifft dieser am Ort des Aufzeichnungshologramms mit einem Winkelspektrum auf. Hierdurch wird bei einer Rekonstruktion des hergestellten Hologramms mit einer weißen Punktlichtquelle oder alternativ mit einem kollimierten Strahl weißen Lichts ein homogenes Lichtfeld an einer gewünschten Raumposition mit einem klar definierten Weißpunkt bereitstellt. Der erfindungsgemäße Belichtungsaufbau bzw. das erfindungsgemäße Verfahren benötigt nur eine monochromatische kohärente Lichtquelle.

Zunächst wird ein Aufzeichnungshologramm, also das zu beschreibende Hologramm, bereitgestellt. Um ein gewünschtes Gitter in das Aufzeichnungshologramm zu schreiben, wird durch eine kohärente Lichtquelle ein Objektstrahl bereitgestellt. Der Objektstrahl durchläuft einen Objektstrahlengang. In dem Objektstrahlengang befindet sich das abzubildende Objekt. Insbesondere wird entsprechend dem Objekt ein Gitter in das Aufzeichnungshologramm geschrieben. Hierzu wird der Objektstrahl von dem Objekt entsprechend moduliert, insbesondere gestreut, und trifft dann auf das Aufzeichnungshologramm.

Der Referenzstrahl wird von der kohärenten Lichtquelle gebildet. Beispielsweise kann ein von der kohärenten Lichtquelle erzeugter Lichtstrahl durch ein halbtransparentes optisches Modul in den Objektstrahl und den Referenzstrahl aufgeteilt werden. Der Referenzstrahl trifft (zusammen mit dem Objektstrahl) auf das Aufzeichnungshologramm, so dass durch eine Intensitätsmodulation am Ort des holografischen Aufzeichnungsmediums ein Gitter in das Aufzeichnungshologramm geschrieben wird.

Es ist erkannt worden, dass zur Erzeugung eines Hologramms, das bei einer Rekonstruktion mit einer weißen Punktlichtquelle oder alternativ mit einem kollimierten Strahl weißen Lichts ein homogenes Lichtfeld an einer gewünschten Raumposition mit einem klar definierten Weißpunkt bereitstellt, der Referenzstrahl winkelmoduliert werden muss. Insbesondere kann hierzu in dem Referenzstrahlengang ein optisches Referenzmodul vorgesehen sein. Der Referenzstrahl wird von diesem optischen Referenzmodul derart winkelgeändert, dass der Referenzstrahl am Ort des Aufzeichnungshologramms ein Winkelspektrum aufweist.

Insbesondere ist erkannt worden, dass zur Erzielung der oben genannten Aufgabe folgende Bragg-Matching-Bedingungen erfüllt sein sollten:

$$\gamma_R = \gamma_S \text{ und } g_R = g_S, \tag{1}$$

wobei $\gamma_R$ der Gitterwinkel bei der Rekonstruktion, $\gamma_S$ der Gitterwinkel bei dem Schreibvorgang, $g_R$ die Gitterperiode bei der Rekonstruktion und gs die Gitterperiode bei dem Schreibvorgang ist. Um beide Bedingungen, die lokale Gitterperiode und den lokalen Gitterwinkel, gleichzeitig korrekt einzustellen, aber nach wie vor mit nur einer Wellenlänge zu belichten, ist es erfindungsgemäß sehr vorteilhaft, die Referenzwelle am Ort des Hologramms nicht winkelrein auszuprägen, sondern in der Referenzwelle am Ort des Hologramms ein Winkelspektrum vorzuhalten.

Insbesondere ist das optische Referenzmodul derart gebildet, dass die Braggschen Beugungsbedingungen (engl.: Bragg-Matching-Bedingungen) (1) erfüllt werden.

Hier sei darauf hingewiesen, dass es Aufzeichnungshologramme gibt, die ihre Gitterebenen während der Aufzeichnung oder nach der Aufzeichnung, insbesondere durch Weiterverarbeitungsschritte, wie z.B. Entwicklungs- und Fixierschritte, als Folge veränderter Materialeigenschaften, verändern. Dies kann zu gequollenen oder geschrumpften holografischen Gittern führen, die von den Interferenzgittern der Aufzeichnung abweichen. Hier ist eine Winkelkorrektur bzw. -kompensation bei der Berechnung der Bragg-Matching-Bedingungen nötig, die der Anwender unter Kenntnis der Belichtungseigenschaften seines verwendeten holografischen Materials, durchführen kann. Für die vorliegende Erfindung wird nicht einschränkend ausschließlich das Bragg-Matching für den Fall stabiler Gitter betrachtet.

Gemäß einer ersten Ausführungsform kann das Objekt eine Objektstreuscheibe sein. Eine Streuscheibe eignet sich als Objekt für ein Hologramm besonders, um ein Aufzeichnungshologramm zu beschreiben, welches ein homogenes Lichtfeld an einer gewünschten Raumposition mit einem klar definierten Weißpunkt bereitstellt.

Darüber hinaus kann gemäß einer weiteren Ausführungsform das optische Referenzmodul eine Referenzstreuscheibe sein. In einfacher Weise kann der Referenzstrahl entsprechend den obigen Ausführungen winkelmoduliert werden. Durch Berücksichtigung der Bragg-Bedingung für die verschiedenen Rekonstruktionswellenlängen und gewünschten Rekonstruktionswinkel lässt sich die erforderliche Ausdehnung einer Objektstreuscheibe im Objektstrahlengang und der Referenzstreuscheibe im Referenzstrahlengang analytisch einfach berechnen.

Gemäß einer bevorzugten Ausführungsform kann das optische Referenzmodul ein mittels eines Lentikularmoduls beschriebenes Referenzhologramm sein. Insbesondere ist es vorteilhaft, dieses weitere Hologramm in dem erfindungsgemäßen Aufbau mittels einer Planwelle und eines durch eine Lentikularlinsenfolie (kurz: Lentikularfolie) erzeugten Winkelspektrums vorab zu belichten. Lentikularlinsenarrays - bzw. module haben die Eigenschaft, einen Lichtstrahl in einer Ebene zu streuen. In der Ebene senkrecht dazu wird der Lichtstrahl unverändert durchgelassen. Lentikularlinsenarrays können eine Aneinanderreihung von Zylinderlinsen mit einer sehr kurzen Brennweite umfassen. Wenn diese beispielsweise mit einer ebenen Welle beleuchtet werden, wird das Licht direkt hinter den Linsen fokussiert. Dieser nahe Fokuspunkt lässt es genähert als Streuung in einer Ebene betrachten.

Ein entsprechend hergestelltes Referenzhologramm ist besonders vorteilhaft. So muss ein Referenzhologramm nicht großflächig kollimiert beleuchtet werden. Ein Referenzhologramm streut nicht in einen großen Raum. Darüber hinaus kann die durch das Bragg-Matching gewünschte Winkelverteilung in dem Referenzhologramm mit einer hohen Genauigkeit bereitgestellt werden. Mit dieser Winkelverteilung kann eine phasenkonjugierte Rekonstruktion ermöglicht werden, indem das Referenzhologramm gedreht wird. Somit kann die für das Schreiben des Aufzeichnungshologramms erforderliche Ausgangsleistung der kohärenten Lichtquelle reduziert werden. Der Aufbau bzw. die Vorrichtung kann signifikant verkleinert werden.

Darüber hinaus kann in einer Ausführungsform der Objektstrahl und der Referenzstrahl von einer, insbesondere gemeinsamen bzw. gleichen, Laserquelle erzeugt werden. Beispielsweise kann ein grüner Laser eingesetzt werden. Es versteht sich, dass andere kohärente Lichtquellen verwendet werden können.

Grundsätzlich kann das Aufzeichnungshologramm aus unterschiedlichen Materialien gebildet werden. Gemäß einer Ausführungsform des erfindungsgemäßen Verfahrens kann das Aufzeichnungshologramm aus einem Material gebildet werden ausgewählt aus der Gruppe umfassend photoresistive Materialien, Photopolymer, Silberhalogenid Dichromatgelatine, photochrome Materialien oder photorefraktive Materialien. Hierbei sind Photopolymere als Material besonders bevorzugt. Grund hierfür ist, dass Photopolymere besonders einfach holografisch zu prozessieren sind. Ferner weisen Photopolymere eine hohe Beugungseffizienz auf. Wird ein Referenzhologramm verwendet, kann das Referenzhologramm aus einem zuvor genannten Material, vorzugsweise aus einem Photopolymer, gebildet sein.

Das Aufzeichnungshologramm kann gemäß einer Ausführungsform ein Volumenaufzeichnungshologramm sein. Ein Volumenhologramm kann auch als dickes Hologramm bezeichnet werden. Ein Volumenaufzeichnungshologramm kann eine Dicke $d \gg g^2/\lambda$ aufweisen, wobei $g$ der Abstand der Gitterebenen, d.h. der geometrische Abstand zweier benachbarter Maxima der Gittermdodulation, und $\lambda$ die Wellenlänge eines Lichtstrahls ist. Das Referenzhologramm kann vorzugsweise ebenfalls ein Volumenreferenzhologramm mit einer Dicke $d \gg g^2/\lambda$ sein.

Gemäß einer weiteren erfindungsgemäßen Ausführungsform kann im Objektstrahlengang zwischen dem Objekt und dem Aufzeichnungshologramm ein Linsenmodul, insbesondere eine maskierte Fresnellinse, angeordnet sein. Indem insbesondere eine maskierte Fresnellinse eingesetzt wird, kann die erforderliche Ausgangsleistung der kohärenten Lichtquelle weiter reduziert werden. Die Referenzstreuscheibe kann hierdurch auf die Hologrammebene abgebildet werden. Dadurch kann, je nach Abbildungsmaßstab, die abzubildende Referenzstreuscheibe kleiner als sein, als sie es ohne Abbildung wäre. Folglich kann die benötigte Leistung des Lasers herabgesetzt werden. An der Position, an der sich die Referenzstreuscheibe ohne Abbildung befinden müsste, kann sich die maskierte Fresnellinse befinden.

Ein weiterer Aspekt der Erfindung ist eine Vorrichtung zum Herstellen eines Hologramms. Die Vorrichtung umfasst eine kohärente Lichtquelle zum Erzeugen eines Objektstrahls und eines Referenzstrahls. Die Vorrichtung umfasst ein vor dem Aufzeichnungshologramm in einem Objektstrahlengang angeordnetes Objekt. Die Vorrichtung umfasst in einem Referenzstrahlengang vor dem Aufzeichnungshologramm ein optisches Referenzmodul. Das optische Referenzmodul ist eingerichtet, den Referenzstrahl derart winkelzuändern, dass der Referenzstrahl am Ort des Aufzeichnungshologramms ein Winkelspektrum aufweist. Die Vorrichtung ist insbesondere zur Durchführung des zuvor beschriebenen Verfahrens geeignet.

Für die Belichtung des erfindungsgemäßen Hologramms kann eine Signalwelle, die durch einen optischen Aufbau bzw. einer Vorrichtung umfassend einen Diffusor mit Apertur, der durch eine Abbildungsoptik auf das zu belichtende Aufzeichnungsmedium, also das Aufzeichnungshologramm, abgebildet werden kann, genutzt werden.

Ein besonderes Kennzeichen des erfindungsgemäßen Belichtungsaufbaus ist, dass sowohl die/der Referenzwelle bzw. -strahl (z.B. hergestellt durch eine Planwelle und einem Referenzhologramm, das phasenkonjugiert rekonstruiert wird) als auch die Signalwelle bzw. der Objektstrahl (z.B. erzeugt durch eine Linsenoptikabbildung eines durch eine Apertur abgegrenzten Diffusors) passgenau und damit lichteffizient am Ort des Aufzeichnungsmediums kohärentes Licht, wie Laserlicht, zur Interferenz bringen können.

Ein noch weiterer Aspekt der Erfindung ist ein Hologramm, insbesondere ein Transmissionshologramm, hergestellt nach dem zuvor beschriebenen Verfahren. Das hergestellte Hologramm gibt die Farbtemperatur der Lichtquelle gut wieder. Das Transmissionshologramm ist insbesondere ein Transmissionsvolumenhologramm.

Ein noch weiterer Aspekt der Erfindung ist eine Verwendung des zuvor beschriebenen Hologramms als holografisch-optisches Element für Weißlicht mit scharf begrenztem Sichtfeld.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Herstellungsverfahren, die erfindungsgemäße Vorrichtung, das erfindungsgemäße Hologramm und die erfindungsgemäße Verwendung eines Hologramms auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1        eine schematische Ansicht einer Vorrichtung zum Herstellen eines Hologramms gemäß dem Stand der Technik,

Fig. 2        eine schematische Ansicht einer weiteren Vorrichtung zum Herstellen eines Hologramms gemäß dem Stand der Technik,

Fig. 3        eine schematische Ansicht einer Vorrichtung zum Rekonstruieren eines Hologramms gemäß dem Stand der Technik,

Fig. 4        eine schematische Ansicht einer weiteren Vorrichtung zum Rekonstruieren eines Hologramms gemäß dem Stand der Technik,

Fig. 5        eine schematische Ansicht einer weiteren Vorrichtung zum Herstellen eines Hologramms gemäß dem Stand der Technik,

Fig. 6        eine schematische Ansicht einer weiteren Vorrichtung zum Rekonstruieren eines Hologramms gemäß dem Stand der Technik,

Fig. 7        eine schematische Ansicht eines ersten Ausführungsbeispiels einer Vorrichtung zum Herstellen eines Hologramms gemäß der vorliegenden Erfindung,

Fig. 8        eine schematische Ansicht eines weiteren Ausführungsbeispiels einer Vorrichtung zum Herstellen eines Hologramms gemäß der vorliegenden Erfindung,

Fig. 9        eine schematische Ansicht eines Lichtfelds von einem Hologramm, das nach einem Verfahren gemäß der Erfindung hergestellt wurde,

Fig. 10       eine schematische Ansicht eines Ausführungsbeispiels einer Vorrichtung zum Herstellen eines Referenzhologramms gemäß der vorliegenden Erfindung,

Fig. 11       eine schematische Ansicht eines Ausführungsbeispiels einer Vorrichtung zum Rekonstruieren des Referenzhologramms nach Figur 10, und

Fig. 12       eine schematische Ansicht eines weiteren Ausführungsbeispiels einer Vorrichtung zum Herstellen eines Hologramms gemäß der vorliegenden Erfindung.

Nachfolgend werden gleiche Bezugszeichen für gleiche Elemente verwendet.

Die Figur 7 zeigt eine schematische Ansicht eines ersten Ausführungsbeispiels einer Vorrichtung 700 zum Herstellen eines Hologramms gemäß der vorliegenden Erfindung. Insbesondere sind zu Gunsten einer besseren Übersichtlichkeit nur die besonders wesentlichen Elemente im Objektstrahlengang 701 und dem Referenzstrahlengang 702 der Vorrichtung 700 dargestellt.

Der von einer kohärenten Lichtquelle gebildete Objektstrahl 704 trifft zunächst auf ein Objekt 711, vorliegend eine Objektstreuscheibe 711. Der entsprechend gestreute Objektstrahl 704 wird mittels einer Fresnellinse 712 auf ein Aufzeichnungshologramm 703, also auf das zu beschreibende Hologramm 703, gelenkt.

Das Aufzeichnungshologramm 703 ist insbesondere ein Volumenhologramm 703 mit einer Dicke $d \gg g^2/\lambda$. Nachfolgend wird ein Zahlenbeispiel für ein Volumenhologramm 703 angegeben. Es werden folgende praxisrelevanten Werte angenommen: $\lambda$ = 532 nm und d = 16 $\mu$m. Daraus folgt: Sofern die Gitterperiode g viel kleiner ist als 2,92 $\mu$m, handelt es sich um ein dickes Gitter. Vorzugsweise ist die Größenordnung der Gitterperiode ungefähr die der Wellenlänge $\lambda$. Das Aufzeichnungshologramm 703 ist vorzugsweise aus einem Photopolymer gebildet.

Im Unterschied zum Stand der Technik weist der Referenzstrahlengang 702 ein optisches Referenzmodul 716, vorliegend eine Referenzstreuscheibe 716, auf. Der von der kohärenten Lichtquelle gebildete Referenzstrahl 705 wird durch die Referenzstreuscheibe 716 gestreut. Insbesondere bewirkt die Referenzstreuscheibe 716 eine Winkeländerung des Referenzstrahls derart, dass der Referenzstrahl am Ort des Aufzeichnungshologramms 703 ein Winkelspektrum aufweist. Insbesondere ist das optische Modul 716, wie die Referenzstreuscheibe 716, derart gebildet, dass die Bragg-Matching-Bedingungen erfüllt werden.

Es ist erkannt worden, dass bei Erfüllung der Bragg-Matching-Bedingungen ein Hologramm mit einer einzelnen kohärenten Lichtquelle hergestellt werden kann, welches bei der Rekonstruktion z.B. mit weißen Licht das gewünschte Lichtfeld abstrahlt.

Nachfolgend werden die Bragg-Matching-Bedingungen näher erläutert. Um ein holografisches Gitter bzw. ein Hologramm mit einem Gitter bereitzustellen, müssen verschiedene Parameter berücksichtigt werden. Dazu gehören die Rekonstruktionswellenlänge und die Winkel der Referenz- und Objektwelle bzw. des Referenz- und Objektstrahls sowie der Gitterwinkel und die Gitterperiode.

Es hat sich gezeigt, dass entscheidend für die Frage, wie dieses charakterisierte Gitter mit einer anderen Wellenlänge erzeugt werden kann, die Gitterperiode g und der Gitterwinkel $\gamma$ sind. Durch diese Parameter können die Schreibwellenlänge und die Objekt- und Referenzwinkel ausgedrückt werden. Sie müssen sowohl bei der Belichtung als auch bei der Rekonstruktion gleich sein.

Hierfür ist die Belichtungsvorrichtung bzw. Herstellungsvorrichtung (z.B. 700) so eingerichtet, dass diese gewünschten Parameter entstehen. Insbesondere kann das optische Referenzmodul entsprechend gebildet sein. Damit die Gitterperiode und der Gitterwinkel unverändert bleiben, müssen sich der Objekt- und Referenzwinkel symmetrisch um die Gitternormale ändern.

Wie bereits beschrieben wurde, lauten die Bragg-Matching-Bedingungen wie folgt:

$$\gamma_R = \gamma_S \text{ und } g_R = g_S, \tag{1}$$

wobei $\gamma_R$ der Gitterwinkel bei der Rekonstruktion, $\gamma_S$ der Gitterwinkel bei dem Schreibvorgang, $g_R$ die Gitterperiode bei der Rekonstruktion und gs die Gitterperiode bei dem Schreibvorgang ist.

Wie bereits beschrieben wurde, werden Veränderungen in der Gitterperiode gs, die in der Praxis durch Materialveränderungen während / nach der holografischen Belichtung und durch die Nachbearbeitung der Hologramme auftreten können, hier nicht betrachtet. $g_S$ sei bereits der korrigierte Wert der Gitterperiode nach dem Schreibvorgang.

Aus diesen Bedingungen (1) lassen sich die nachfolgend dargestellten zwei Funktionen ableiten:

$$\alpha_{M,S} = \frac{\alpha_{M,R} + \beta_{M,R}}{2} + \arcsin\left( \frac{\lambda_S}{\lambda_R} \cdot \sin\left( \frac{\alpha_{M,R} - \beta_{M,R}}{2} \right) \right) \tag{2}$$

$$\beta_{M,S} = \frac{\alpha_{M,R} + \beta_{M,R}}{2} - \arcsin\left( \frac{\lambda_S}{\lambda_R} \cdot \sin\left( \frac{\alpha_{M,R} - \beta_{M,R}}{2} \right) \right) \tag{3}$$

Es sind zwei Funktionen abgeleitet worden, in die die Schreibwellenlänge $\lambda_S$, die Rekonstruktionswellenlänge $\lambda_R$, der gewünschte Objektwinkel $\alpha_{M,R}$ und der gewünschte Referenzwinkel $\beta_{M,R}$ übergeben werden und als Lösung die Schreibwinkel für Objektstrahl $\alpha_{M,S}$ und Referenzstrahl $\beta_{M,S}$ zurückgegeben werden. Mittels der hierdurch erhaltenen Schreibwinkel $\alpha_{M,S}$ und $\beta_{M,S}$ kann der Aufbau, insbesondere das optische Referenzmodul und/oder das Objekt, gebildet werden.

Durch den in Figur 7 gezeigten Aufbau 700, insbesondere indem sowohl im Objekt- als auch im Referenzstrahlengang Streuscheiben 711, 716 eingesetzt werden, kann eine gewünschte Winkelverteilung in dem Aufzeichnungshologramm 703 erzeugt werden. Insbesondere können die Bragg-Bedingungen eingehalten werden. Die Streuscheiben 711, 716 erzeugen neben den gewünschten Winkeln natürlich auch viele andere.

Der Bragg-Matching Formalismus kann (lediglich) für zwei Wellenlängen durchgeführt werden. Durch die zusätzlichen Winkel der Streuscheiben findet jedoch ein Machting der dazwischenliegenden Wellenlängen (automatisch) statt.

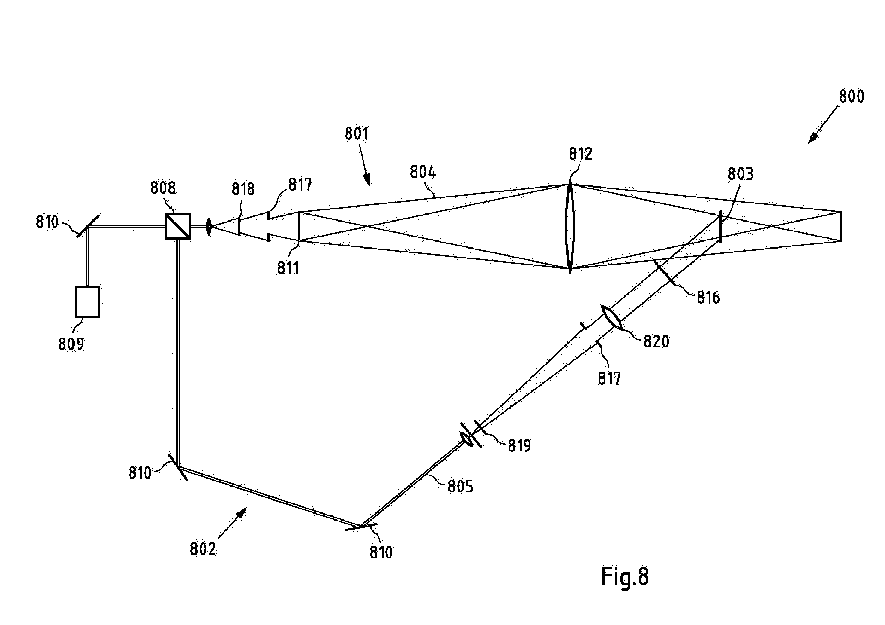

Figur 8 zeigt ein weiteres Ausführungsbeispiel eines erfindungsgemäßen Aufbaus 800 bzw. einer erfindungsgemäßen Vorrichtung 800 zum Beschreiben bzw. Herstellen eines Hologramms.

Als kohärente Lichtquelle 809 wird ein Laser 809, wie ein grüner Laser 809, eingesetzt. Es versteht sich, dass andere Laser verwendet werden können. Über einen Spiegel 810 wird der Laserstrahl auf ein habtransparentes optisches Modul 808, wie einen optischen Strahlteiler 808, gelenkt. Dieses teilt den Laserstrahl in einen Objektstrahl 804 und einen Referenzstrahl 805 auf.

Über optische Module, wie Spiegel 810, Lochblenden ("Pinholes"), strahlbegrenzende Blenden 817 und Linsen 820, wird der Referenzstrahl 805 auf eine Referenzstreuscheibe 816 gelenkt. Der von der Referenzstreuscheibe 816 gestreute Strahl trifft anschließend auf das Aufzeichnungshologramm 803. Die Streuscheiben 816 und 811 können Platten oder Folien sein und z.B. einen Streuwinkel mit einer Halbwertsbreite von 39° aufweisen und vorzugsweise maskiert sein.

Über optische Module, wie eine Streuscheibe 818, Blende 817, wird der Objektstrahl 804 auf die Objektstreuscheibe 811 gelenkt. Mittels der Fresnellinse 812 wird der gestreute Objektstrahl 804 zum Beschreiben des Aufzeichnungshologramms 803 auf selbiges gelenkt. Insbesondere werden auch bei dem Aufbau 800 die Bragg-Matching-Bedingungen eingehalten.

In einem Versuch wurde die Qualität des mittels der Vorrichtung 800 hergestellten Hologramms untersucht. Mit einem Laser, der in den Wellenlängen 432 nm, 532 nm und 632 nm emittiert, wurde das beschriebene Hologramm rekonstruiert und das Leuchtfeld / das Sichtfeld (engl.: Viewbox) mit einem Schirm aufgefangen. Die weiße Lichtquelle war in diesem Fall ein kompakter Laserprojektor, der mit einem weißen Bild angesteuert wurde.

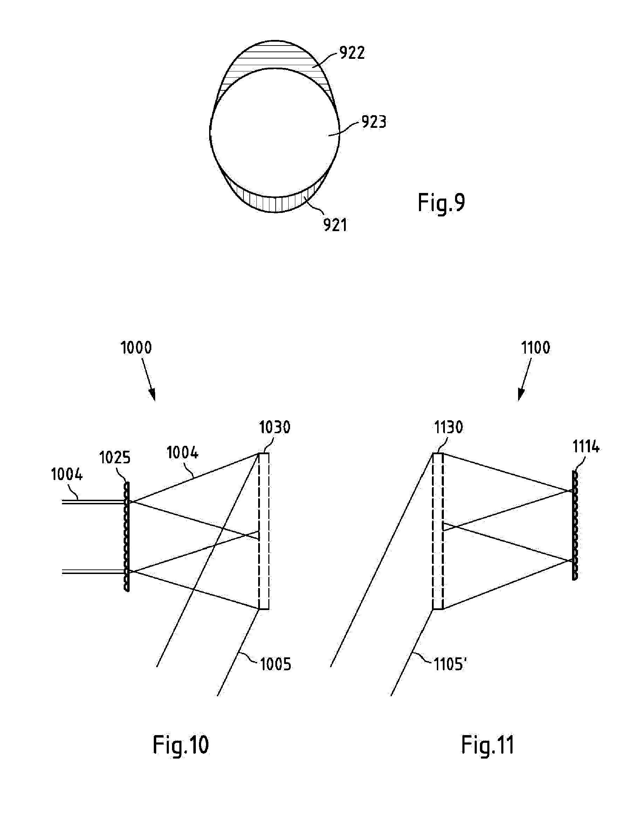

Figur 9 zeigt schematisch die mit einem Schirm aufgefangene Viewbox. Es ist der Figur 9 zu entnehmen, dass - wie gewünscht - ein weißer Bereich 923 existiert. Der Farbverlauf über dem weißen Bereich ist mit 922 bezeichnet. Er ist bläulich und seine spektrale Blauverschiebung nimmt ausgehend von dem weißen Bereich stetig zu. Der Farbverlauf unter dem weißen Bereich 923 ist mit 921 bezeichnet und rötlich. Er verläuft entsprechend dem blauen Bereich 922. Dies ist darauf zurückzuführen, dass zusätzlich zu den Winkeln, die durch das Bragg-Matching gefordert wurden, noch weitere in das Hologramm geschrieben wurden. Insbesondere hat der Versuch jedoch bestätigt, dass durch das erfindungsgemäße Verfahren ein Hologramm hergestellt werden kann, das einen Bereich 923 mit weißem Licht bereitstellt.

In einem alternativen erfindungsgemäßen Ausführungsbeispiel kann die Referenzstreuscheibe durch ein Referenzhologramm ersetzt werden. Wie bereits beschrieben wurde, ist zur Erzielung des gewünschten Lichtbilds erforderlich, dass eine Referenzwelle bzw. ein Referenzstrahl nach den Anforderungen der Bragg-Matching Bedingungen (1) bereitgestellt werden.

Es ist erkannt worden, dass eine Winkelverteilung, die eine Auffächerung vieler ebener Wellen verlangt, von einem Lentikularlinsenarray bereitgestellt werden kann (sofern sie mit einer ebenen Welle beleuchtet werden). Die Nutzung eines Lentikularmoduls als Referenzmodul ist jedoch nicht bevorzugt. Das Problem liegt insbesondere darin, dass der Ursprung der Auffächerung auf der Ebene der Lentikularlinsen liegt und nicht, wie gewünscht, auf der Hologrammebene. Es hat sich gezeigt, dass anstelle eines Lentikularlinsenarray als optisches Referenzmodul ein weiteres Hologramm, also ein Referenzhologramm, genutzt werden kann. Damit eine Winkelauffächerung den Ursprung auf der Hologrammebene hat, wird vorzugsweise ein Lentikularlinsenarray als Objekt in das Referenzhologramm geschrieben. Als Referenzwelle dient hier eine ebene Welle. Wenn nach dem Schreibvorgang das Referenzhologramm nun konjugiert rekonstruiert wird, wird ein reelles Bild dieser Lentikularlinsen erzeugt. Somit steht eine Winkelverteilung mit dem Ursprung der Auffächerung auf einer Ebene, die nicht der Ebene der Lentikularlinsen entspricht, zur Verfügung.

Die Figur 10 zeigt einen Aufbau 1000 zum Beschreiben eines Referenzhologramms 1030 entsprechend der obigen Beschreibung. Ein Objektstrahl 1004 wird auf ein Lentikularmodul 1025 bzw. Lentikulararray 1025 gelenkt. Der von dem Lentikularmodul 1025 aufgeweitete Objektstrahl 1004 trifft dann auf das aufzuzeichnende Referenzmodul 1030 bzw. Referenzhologramm 1030. Ein gewünschtes Gitter wird mittels des Referenzstrahls 1005 in das Referenzhologramm 1030 geschrieben.

In Figur 11 ist eine schematische Ansicht eines vereinfachten Aufbaus 1100 zur Rekonstruktion dargestellt. Auf das zuvor beschriebene Referenzhologramm 1130 (In Fig. 10 mit 1030 bezeichnet) trifft ein konjugierter, also um 180° phasenverschobener Referenzstrahl 1105'. Das gewünschte reelle Bild 1114 kann rekonstruiert werden. Gegenüber einer Referenzstreuscheibe weist ein Referenzhologramm, wie das zuvor beschriebene, einige Vorteile auf.

Eine Streuscheibe hat den Nachteil, dass sie sowohl großflächig kollimiert beleuchtet werden muss, als auch in einen großen Raum streut. Indem eine Referenzstreuscheibe durch eine Referenzhologramm ersetzt wird, können diese Nachteile zumindest reduziert werden. Darüber hinaus kann im Vergleich zu einer Referenzstreuscheibe die durch das Bragg-Matching gewünschte Winkelverteilung in dem Referenzhologramm mit einer besseren Genauigkeit bereitgestellt werden. Mit dieser Winkelverteilung kann eine konjugierte Rekonstruktion ermöglicht werden, indem das Referenzhologramm gedreht wird. Somit ist für das Schreiben des Aufzeichnungshologramms eine geringe Ausgangsleistung der kohärenten Lichtquelle erforderlich. Der Aufbau kann signifikant verkleinert werden.

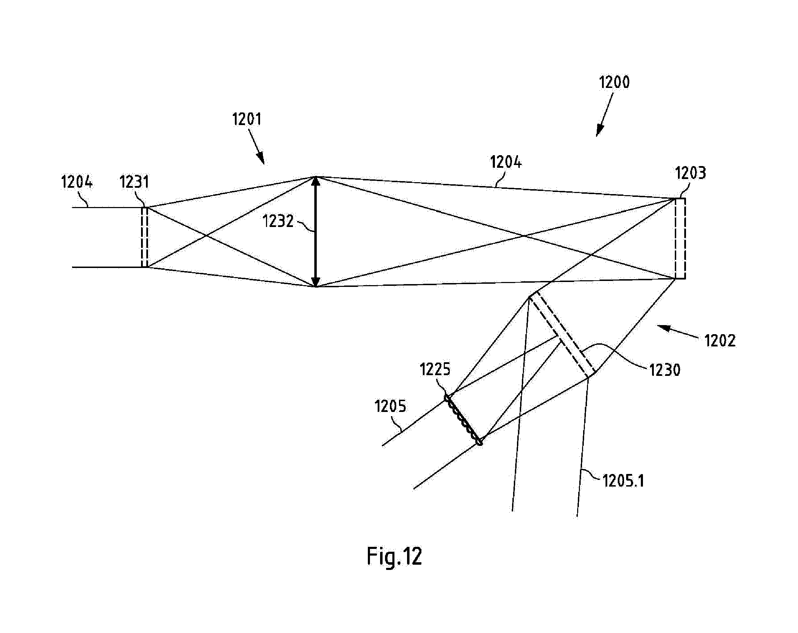

Die Figur 12 zeigt eine beispielhafte Vorrichtung 1200 bzw. einen beispielhaften Aufbau 1200 zum Beschreiben eines Aufzeichnungshologramms 1203 mittels eines Referenzhologramms 1230. In dem Objektstrahlengang 1201 trifft der von einer (nicht gezeigten) kohärenten Lichtquelle, insbesondere einem Laser, gebildete Objektstrahl 1204 auf eine Objektstreuscheibe 1231. Als Frensnellinse 1232 wird vorliegend eine maskierte Frensnellinse 1232 eingesetzt. Diese ist so maskiert, dass nur die Strahlen, die durch das Bragg-Matching gefordert werden, existieren bzw. auf das Aufzeichnungsholgramm 1203 geleitet werden. Hierdurch kann die Objektstreuscheibe 1231 verkleinert und insbesondere die erforderliche Leistung der kohärenten Lichtquelle (weiter) reduziert werden.

Im Referenzstrahlengang 1202 kann ein Referenzhologramm 1230 von einer Referenzwelle 1205 beleuchtet werden. Die Referenzwelle 1205 ist eine ebene Welle, die zunächst auf ein Lentikularmodul 1225 trifft. Eine ebene Welle trifft als Referenzwelle 1205.1 ebenfalls auf das Referenzhologramm 1230. Die resultierende Welle bzw. der resultierende Referenzstrahl trifft dann auf das Aufzeichnungshologramm 1203. In das Aufzeichnungshologramm wird das gewünschte Gitter geschrieben.

Wie beschrieben, befinden sich in diesem Aufbau 1200 zwei Hologramme, das Referenzhologramm 1230 und das Aufzeichnungshologramm 1203. Ein großer Vorteil des Aufbaus 1200 ist es, dass jedes Hologramm geschrieben werden kann, ohne dass Bauteile neu platziert werden müssen. Es werden lediglich die variablen Strahlteiler so eingestellt, dass die benötigen Strahlen aktiv sind.

**Patentansprüche**

1. Verfahren zum Herstellen eines Hologramms, insbesondere eines Transmissionshologramms, umfassend:

   - Bereitstellen von einem Aufzeichnungshologramm (703, 803, 1203),
   - Belichten des Aufzeichnungshologramms (703, 803, 1203) mit einem durch eine kohärente Lichtquelle (809) erzeugten Objektstrahl (704, 804, 1204), wobei ein abzubildendes Objekt (711, 811,1231) in dem Objektstrahlengang (701, 801, 1201) vorgesehen ist, und
   - Belichten des Aufzeichnungshologramms (703, 803, 1203) mit einem durch die kohärente Lichtquelle (809) erzeugten Referenzstrahl (705, 805, 1205),
   **dadurch gekennzeichnet, dass**
   - der Referenzstrahl (705, 805, 1205) von einem optischen Referenzmodul (716, 816, 1230) derart winkelgeändert wird, dass der Referenzstrahl (705, 805, 1205) am Ort des Aufzeichnungshologramms (703, 803, 1203) ein Winkelspektrum aufweist.

2. Verfahren nach Anspruch 1, **dadurch gekennzeichnet, dass** das Objekt (711, 811,1231) eine Objektstreuscheibe (711, 811,1231) ist.

3. Verfahren nach Anspruch 1 oder 2, **dadurch gekennzeichnet, dass** das optische Referenzmodul (716, 816, 1230) eine Referenzstreuscheibe (716, 816) ist.

4. Verfahren nach Anspruch 1 oder 2, **dadurch gekennzeichnet, dass** das optische Referenzmodul (716, 816, 1230) ein mittels eines Lentikularmoduls (1025, 1225) beschriebenes Referenzhologramm (1230) ist.

5. Verfahren nach einem der vorherigen Ansprüche, **dadurch gekennzeichnet, dass** der Objektstrahl ((704, 804, 1204) und der Referenzstrahl (705, 805, 1205) von einer Laserquelle (809) erzeugt werden.

6. Verfahren nach einem der vorherigen Ansprüche, **dadurch gekennzeichnet, dass** das Aufzeichnungshologramm (703, 803, 1203) aus einem Material gebildet ist ausgewählt aus der Gruppe umfassend photoresistive Materialien, Photopolymer, Silberhalogenid, Dichromatgelatine, photochrome Materialien oder photorefraktive Materialien.

7. Verfahren nach einem der vorherigen Ansprüche, **dadurch gekennzeichnet, dass** das Aufzeichnungshologramm (703, 803, 1203) ein Volumenaufzeichnungshologramm (703, 803, 1203) ist, wobei ein Volumenaufzeichnungshologramm (703, 803, 1203) eine Dicke $d \gg g^2/\lambda$ aufweist, wobei g der Abstand der Gitterebenen und $\lambda$ die Wellenlänge eines Lichtstrahls ist.

8. Verfahren nach einem der vorherigen Ansprüche, **dadurch gekennzeichnet, dass** in dem Objektstrahlengang (701, 801, 1201) zwischen dem Objekt (711, 811,1231) und dem Aufzeichnungshologramm (703, 803, 1203) ein Linsenmodul (712, 812,1232), insbesondere eine maskierte Fresnellinse (1232), angeordnet ist.

9. Vorrichtung zum Herstellen eines Hologramms, umfassend:

   - eine kohärente Lichtquelle (809) zum Erzeugen eines Objektstrahls (704, 804, 1204) und eines Referenzstrahls (705, 805, 1205),
   - ein vor einem Aufzeichnungsholgramm (703, 803, 1203) in einem Objektstrahlengang (701, 801, 1201) angeordnetes Objekt (711, 811,1231),
   **dadurch gekennzeichnet, dass**
   - in einem Referenzstrahlengang (702, 802, 1202) vor dem Aufzeichnungsholgramm (703, 803, 1203) ein optisches Referenzmodul (716, 816, 1230) vorgesehen ist,
   - wobei das optische Referenzmodul (716, 816, 1230) eingerichtet ist, den Referenzstrahl (705, 805, 1205) derart winkelzuändern, dass der Referenzstrahl (705, 805, 1205) am Ort des Aufzeichnungshologramms (703, 803, 1203) ein Winkelspektrum aufweist.

**10.** Hologramm hergestellt nach dem Verfahren gemäß einem der vorherigen Ansprüche 1 bis 8.

**11.** Verwendung des Hologramms nach Anspruch 10 als holografisch-optisches Element für Weißlicht mit scharf begrenztem Sichtfeld.

Fig.1 Stand der Technik

Fig.2 Stand der Technik

Fig.3 Stand der Technik

414.3

403

405'

414.1

414.2

Fig.4  Stand der Technik

511

504

503

503

514

505

Fig.5  Stand der Technik

Fig.6  Stand der Technik

Fig.7

Fig.8

Fig.9

Fig.10

Fig.11

Fig.12

**Europäisches Patentamt**
**European Patent Office**
**Office européen des brevets**

## EUROPÄISCHER RECHERCHENBERICHT

**Nummer der Anmeldung**

EP 15 16 3225

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 535 013 A (ROSEN LOWELL) 20. Oktober 1970 (1970-10-20) | 1-3,5-7, 9-11 | INV. G03H1/12 G03H1/04 |
| Y | * das ganze Dokument * | 4 | |
| | ----- | | |
| X | US 5 365 354 A (JANNSON TOMASZ P [US] ET AL) 15. November 1994 (1994-11-15) | 1-3,5-11 | |
| Y | * Abbildungen 5, 19, 23, 24 * * Spalte 5, Zeilen 64, 65 * * Spalte 12, Zeile 20 - Spalte 17, Zeile 22 * | 4 | |
| | ----- | | |
| X | US 2004/066548 A1 (BOERNER VOLKMAR [DE] ET AL) 8. April 2004 (2004-04-08) | 1-3,5-11 | |
| Y | * Zusammenfassung; Abbildung 1 * * Absätze [0002], [0016], [0017], [0034] - [0003] * | 4 | |
| | ----- | | |
| A | EP 0 849 649 A2 (DENSO CORP [JP]) 24. Juni 1998 (1998-06-24) * Zusammenfassung; Abbildungen 1, 2, 4 * * Seite 3, Zeile 42 - Seite 5, Zeile 9 * * Seite 7, Zeile 42 - Seite 8, Zeile 30 * | 1,2,5-7, 9-11 | |
| | ----- | | |
| Y | US 4 336 978 A (SUZUKI TAKASHI) 29. Juni 1982 (1982-06-29) * das ganze Dokument * ----- | 4 | |

**RECHERCHIERTE SACHGEBIETE (IPC)**

G03H
G02B

Der vorliegende Recherchenbericht wurde für alle Patentansprüche erstellt

| Recherchenort | Abschlußdatum der Recherche | Prüfer |
|---|---|---|
| München | 2. Juli 2015 | Lutz, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 15 16 3225

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2015

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 3535013 | A | 20-10-1970 | KEINE | | | |
| US 5365354 | A | 15-11-1994 | EP | 0479490 | A2 | 08-04-1992 |
| | | | JP | 3390954 | B2 | 31-03-2003 |
| | | | JP | H04299303 | A | 22-10-1992 |
| | | | JP | 2001021721 | A | 26-01-2001 |
| | | | US | 5365354 | A | 15-11-1994 |
| US 2004066548 | A1 | 08-04-2004 | DE | 10105957 | A1 | 19-09-2002 |
| | | | EP | 1360528 | A1 | 12-11-2003 |
| | | | US | 2004066548 | A1 | 08-04-2004 |
| | | | WO | 02065166 | A1 | 22-08-2002 |
| EP 0849649 | A2 | 24-06-1998 | EP | 0849649 | A2 | 24-06-1998 |
| | | | US | 6111670 | A | 29-08-2000 |
| | | | US | 6330087 | B1 | 11-12-2001 |
| US 4336978 | A | 29-06-1982 | DE | 2951207 | A1 | 10-07-1980 |
| | | | US | 4336978 | A | 29-06-1982 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5854697 A
- US 4963471 A
- US 4799739 A

**In der Beschreibung aufgeführte Nicht-Patentliteratur**

- **D. H. CLOSE ; A. D. JACOBSON ; J. D. MARGERUM ; R. G. BRAULT ; F. J. MCCLUNG.** *Appl. Phys. Lett.,* 1969, vol. 14, 159
- **H. M. SMITH.** Principles of Holography. Wiley-Interscience, 1969
- **S. BENTON.** Holographic Imaging. John Wiley & Sons, 2008
- **A. A. FRIESEM ; R. J. FEDEROWICZ.** Recent advances in multicolor wavefront reconstruction. *Applied Optics,* 1966, vol. 5, 1085-1086
- **A. A. FRIESEM ; R. J. FEDEROWICZ.** Multicolor wavefront reconstruction. *Applied Optics,* 1967, vol. 6, 529-536